# EUROPÄISCHE PATENTSCHRIFT

(11) **EP 0 736 547 B1**
(45) Veröffentlichungstag und Bekanntmachung des Hinweises auf die Patenterteilung: **07.10.1998**
(21) Anmeldenummer: 96104924.4
(22) Anmeldetag: 28.03.1996
(51) Int. Cl.: C08F 2/22

(54) **Wässrige Polymerisatdispersion**
Aqueous polymer dispersions
Dispersions aqueuses de polymères

(30) Priorität: 06.04.1995 DE 19512882
(43) Veröffentlichungstag der Anmeldung: 09.10.1996
(73) Patentinhaber: BASF AKTIENGESELLSCHAFT, 67056 Ludwigshafen (DE)
(72) Erfinder: Schade, Christian, Dr., 67061 Ludwigshafen (DE)

(56) Entgegenhaltungen:
- EP-A- 0 190 892
- EP-A- 0 529 695

## Beschreibung

Vorliegende Erfindung betrifft wäßrige Polymerisatdispersionen, die dadurch erhältlich sind, daß man ein Gemisch aus wenigstens eine ethylenisch ungesättigte Gruppe aufweisenden radikalisch polymerisierbaren Monomeren nach der Methode der radikalischen wäßrigen Emulsionspolymerisation mit der Maßgabe polymerisiert, daß
a) das Monomerengemisch zu 30 bis 90 Gew.-%, bezogen auf das Gemisch, aus Monomeren besteht, deren Löslichkeit in Wasser bei der gewählten Polymerisationstemperatur und dem gewählten Polymerisationsdruck ≥ 5 Gew.-%, bezogen auf die Wassermenge, beträgt (Monomere a),
b) das Monomerengemisch zu 10 bis 70 Gew.-%, bezogen auf das Gemisch, aus Monomeren besteht, deren Löslichkeit in Wasser bei der gewählten Polymerisationstemperatur und dem gewählten Polymerisationsdruck ≤ 5 Gew.-%, bezogen auf die Wassermenge, beträgt (Monomere b) und
c) wenigstens ein Teil der radikalischen wäßrigen Emulsionspolymerisation in einem Dispergiermedium erfolgt, das neben Wasser aus einem organischen Lösungsmittel besteht, dessen Löslichkeit in Wasser bei der gewählten Polymerisationstemperatur und dem gewählten Polymerisationsdruck, bezogen auf die Wassermenge, ≤ 10 Gew.-% beträgt, wobei die Menge des organischen Lösungsmittels so bemessen ist, daß sie einerseits ausreicht, um neben der wäßrigen Phase die Ausbildung einer Lösungsmittelphase zu bewirken und andererseits, bezogen auf die Menge der ingesamt zu polymerisierenden Monomeren, wenigstens > 20 Gew.-% beträgt, jedoch gleichzeitig das Zweifache der im Dispergiermedium enthaltenen Wassermasse nicht übersteigt.

Ferner betrifft die vorliegende Erfindung Verfahren zur Herstellung solcher wäßriger Polymerisatdispersionen und deren Verwendung als Verdicker oder Bindemittel.

Wäßrige Polymerisatdispersionen sind fluide Systeme, die als disperse Phase in wäßrigem Dispergiermedium Polymerisatteilchen in stabiler disperser Verteilung befindlich enthalten. Der Durchmesser der Polymerisatteilchen liegt im allgemeinen hauptsächlich im Bereich von 0,01 bis 5 µm, häufig hauptsächlich im Bereich von 0,01 bis 1 µm.

Die Stabilität der dispersen Verteilung erstreckt sich oft über einen Zeitraum von ≥ 1 Monat, vielfach sogar über einen Zeitraum von ≥ 3 Monaten. Die Polymerisatvolumenkonzentration wäßriger Polymerisatdispersionen beträgt in der Regel 10 bis 70 Vol.-%, bezogen auf das Gesamtvolumen der wäßrigen Polymerisatdispersion.

Ebenso wie Polymerisatlösungen beim Verdampfen des Lösungsmittels, weisen wäßrige Polymerisatdispersionen beim Verdampfen des wäßrigen Dispergiermediums die Eigenschaft auf, Polymerisatfilme zu bilden, weshalb wäßrige Polymerisatdispersionen in vielfacher Weise als Bindemittel, z.B. für Anstrichfarben oder Massen zum Beschichten von Leder, Anwendung finden.

Eine weitere bemerkenswerte Eigenschaft wäßriger Polymerisatdispersionen ist ihre bei gleichem Polymerisatgehalt im Vergleich zu Polymerisatlösungen geringere dynamische Viskosität. Mit Vorteil werden daher wäßrige Polymerisatdispersionen von Polymerisaten, die einen erhöhten Anteil an hydrophilen Monomeren wie z.B. 3 bis 6 C-Atome aufweisende α,β-monoethylenisch ungesättigte Carbonsäuren einpolymerisiert enthalten, als Verdickerdispersionen eingesetzt. D.h. das Polymerisat wird in saurem wäßrigem Medium in einer eine relativ geringe dynamische Viskosität bewirkenden dispersen Verteilung erzeugt. Beim Anwender können dann diese niederviskosen wäßrigen Polymerisatdispersionen durch Erhöhung des pH-Wertes in hochviskose verdickend wirkende wäßrige Lösungen überführt werden (vgl. z.B. DE-PS 11 64 095, DE-PS 12 64 945, DE-PS 12 58 721, DE-PS 15 46 315 und DE-PS 12 57 752). Häufig enthält das dispergierte Polymerisat solcher wäßrigen Verdickerdispersionen als weitere hydrophile Monomere zusätzlich tensidische Monomere einpolymerisiert. Unter dem Begriff "tensidische Monomere" werden hier amphiphile grenzflächenaktive Substanzen verstanden, die wenigstens eine ethylenisch ungesättigte Gruppe aufweisen und durch Anlagerung von Alkylenoxid (das in der Regel 2 und/oder 3 bis 8 C-Atome aufweist), insbesondere Ethylenoxid und/oder Propylenoxid, an geeignete, wenigstens eine ethylenisch ungesättigte Gruppe aufweisende, Verbindungen mit beweglichen Protonen (acidem Wasserstoff im Sinne Brönsteds) erhältlich sind. Solchermaßen bewegliche Protonen weisen beispielsweise Hydroxylgruppen oder Carboxylgruppen auf. Vorgenannte tensidische Monomere lassen sich auch als Kondensationsprodukte von Oligoalkylenglykolethern und bewegliche Protonen enthaltenden, wenigstens eine ethylenisch ungesättigte Bindung aufweisenden, Verbindungen auffassen. Weitere tensidische Monomere lassen sich als Additionsprodukte von Oligoalkylenglykolethern an wenigstens eine ethylenisch ungesättigte Bindung und eine Isocyanatgruppe aufweisende Verbindungen auffassen. Normalerweise weisen die tensidischen Monomeren neben der wenigstens einen hydrophilen Polyethergruppe wenigstens einen hydrophoben Rest auf, was im Zusammenspiel den tensidischen Charakter bedingt.

Die hydrophile Polyethergruppe zeichnet normalerweise für die Löslichkeit der tensidischen Monomeren in Wasser verantwortlich, wohingegen die hydrophoben Reste zu Assoziatbildung neigen, wodurch verdickende Wirkung hervorgerufen werden kann.

Prinzipiell unterscheidet der Fachmann wäßrige Polymerisatdispersionen in wäßrige Sekundär- und in wäßrige Primärdispersionen. Die wäßrigen Sekundärdispersionen sind solche, bei deren Herstellung das Polymerisat außerhalb des wäßrigen Dispergiermediums erzeugt wird, z.B. in Lösung eines geeigneten nicht wäßrigen Lösungsmittels befindlich. Diese Lösung wird anschließend in das wäßrige Dispergiermedium überführt und unter Dispergierung das Lösungsmittel, in der Regel destillativ, abgetrennt.

Demgegenüber handelt es sich bei wäßrigen Primärdispersionen um solche, bei denen das Polymerisat aus wenigstens eine ethylenisch ungesättigte Gruppe aufweisenden Monomeren nach der Methode der radikalischen wäßrigen Emulsionspolymerisation unmittelbar in disperser Verteilung befindlich im wäßrigen Dispergiermedium selbst erzeugt wird.

Letztere Methode ist vielfach vorbeschrieben und dem Fachmann daher hinreichend bekannt (vgl. z.B. Encyclopedia of Polymer Science and Engineering, Vol. 8, S. 659 ff (1987); D.C. Blackly, in High Polymer Latices, Vol. 1, S. 35 ff (1966); H. Warson, The Applications of Synthetic Resin Emulsions, Seite 246 ff, Kapitel 5 (1972); D. Diederich, Chemie zu unserer Zeit 24, S. 135 bis 142 (1990); Emulsion Polymerization, Interscience Publishers, New York (1965); DE-A 40 03 422 und Dispersionen synthetischer Hochpolymere, F. Hölscher, Springer Verlag, Berlin (1969)).

Signifikanter Vorteil der radikalischen wäßrigen Emulsionspolymerisation, im Unterschied zu den anderen radikalischen Polymerisationsverfahren, ist, daß sie zu Polymerisaten mit besonders hohem Molekulargewicht führt (vgl. z.B. High Polymers, Vol. IX, Emulsion Polymerisation, Interscience Publishers, Inc., New York (1965), S. 15/16), was beispielsweise bei Verdickerdispersionen von Vorteil ist, da bei gegebener Monomerenzusammensetzung ein erhöhtes Molekulargewicht in der Regel die verdickende Wirkung fördert.

Nachteilig an der bekannten Methode der radikalischen wäßrigen Emulsionspolymerisation von Gemischen aus wenigstens eine ethylenisch ungesättigte Gruppe aufweisenden Monomeren ist jedoch, daß mit zunehmendem Anteil an hydrophilen Monomeren (Monomere mit erhöhter Wasserlöslichkeit) im zu polymerisierenden Monomerengemisch das resultierende Molekulargewicht in seiner Höhe nicht mehr zu befriedigen vermag. Ein weiterer Nachteil ist darin begründet, daß mit zunehmendem Anteil an hydrophilen Monomeren im zu polymerisierenden Monomerengemisch das Verfahren der radikalischen wäßrigen Emulsionspolymerisation vielfach nicht mehr in vollem Umfang erfolgreich durchführbar ist, d.h. erhalten wird häufig eine wäßrige Polymerisatdispersion mit erhöhtem Koagulatgehalt bzw. anstelle einer stabilen wäßrigen Polymerisatdispersion ein koagulierendes System.

Die Aufgabe der vorliegenden Erfindung bestand daher darin, wäß-) rige Polymerisatdispersionen von Polymerisaten, die einen erhöhten Anteil an hydrophilen Monomeren einpolymerisiert enthalten, zur Verfügung zu stellen, die ein erhöhtes Molekulargewicht sowie eine erhöhte Stabilität aufweisen. Ferner bestand die Aufgabe der vorliegenden Erfindung darin, Verfahren zur Herstellung solcher 5 wäßrigen Polymerisatdispersionen zur Verfügung zu stellen.

Demgemäß wurden die eingangs definierten wäßrigen Polymerisatdispersionen gefunden.

Dabei konnte von der EP-A 190 892 als nächstliegendem Stand der Technik ausgegangen werden. Diese Offenlegungsschrift betrifft wäßrige Polymerisatdispersionen, die dadurch erhältlich sind, daß man ein Monomerengemisch aus mindestens einem α,β-monoethylenisch ungesättigten tensidischen Monomer, mindestens einer α,β-mono5 ethylenisch ungesättigten Carbonsäure und mindestens einem nichtionischen ethylenisch ungesättigten Monomer nach der Methode der radikalischen wäßrigen Emulsionspolymerisation mit der Maßgabe polymerisiert, daß wenigstens ein Teil der radikalischen wäßrigen Emulsionspolymerisation in einem Dispergiermedium erfolgt, das neben Wasser aus einem in Wasser eine reduzierte Löslichkeit aufweisenden organischen Lösungsmittel besteht. Gemäß der EP-A 190 892 sind solche wäßrigen Polymerisatdispersionen in befriedigender Weise erhältlich. Aus der EP-A 190 892 war ferner bekannt, daß die dabei resultierenden wäßrigen Polymerisat-dispersionen als wäßrige Verdickerdispersionen (pH-Erhöhung bewirkt verdickende Wirkung) mit erhöhter verdickender Wirkung geeignet sind.

Nachteilig an der Lehre der EP-A 190 892 ist jedoch, daß sie die erhöhte verdickende Wirkung der gemäß ihrer Lehre erhältlichen Verfahrensprodukte darauf zurückführt, daß das Beisein des organischen Lösungsmittels eine besonders gleichförmige Einpolymerisation der tensidischen Monomere bedingt (vgl. S. 6, Zeile 23 der EP-A 190 892 bis S. 7, Zeile 10). Einen Zusammenhang zu einem erhöhten Molekulargewicht der Dispersionspolymerisate sieht die EP-A 190 892 nicht. Darüber hinaus begrenzt die Lehre der EP-A 190 892 die Menge des mit zu verwendenden organischen Lösungsmittels auf maximal 20 Gew.-%, bezogen auf die Menge der insgesamt zu polymerisierenden Monomeren (z.B. Seite 3, Zeile 27 der EP-A 190 892). Ein höherer Lösungsmittelanteil bewirkt gemäß der Lehre der EP-A 190 892 eine Minderung der Verdickerwirkung des resultierenden Dispersionspolymerisats (EP-A 190 892, S. 18, Zeile 1 bzw. 5). Weiteren Stand der Technik bilden die US-A 4 421 902, die US-A 4 423 199, die US-A 4 384 096 und die US-A 4 429 097. Nachteilig an dem von diesen Schriften gebildeten Stand der Technik ist jedoch, daß das wäßrige Dispergiermedium kein organisches Lösungsmittel umfaßt.

Vor diesem Hintergrund überrascht die erfindungsgemäße Lösung der gestellten Aufgabe.

Vorzugsweise beträgt die Löslichkeit des erfindungsgemäß mitzuverwendenden organischen Lösungsmittels in Wasser bei der gewählten Polymerisationstemperatur und dem gewählten Polymerisationsdruck, bezogen auf die Wassermenge, ≤ 8 oder ≤ 6 oder ≤ 4 oder ≤ 1 Gew.-%.

Bezogen auf die Gesamtmenge der zu polymerisierenden Monomeren beträgt die Menge an erfindungsgemäß mitzuverwendendem organischem Lösungsmittel in der Regel nicht mehr als 500 Gew.-%.

Die entsprechend bezogene Menge an erfindungsgemäß mitzuverwendendem organischem Lösungsmittel liegt bei > 20 Gew.-%, vorzugsweise bei 30 bis 150 Gew.-% und besonders bevorzugt bei 40 bis 100 Gew.-%. Der Wasseranteil des wäßrigen Dispergiermediums beträgt erfindungsgemäß, in entsprechender Weise bezogen, in der Regel 40 bis 900, häufig 40 bis 500 Gew.-%. Bezogen auf die Menge des gesamten Dispergiermediums liegt der Lösungsmittelanteil in der Regel bei wenigstens 5, üblicherweise jedoch bei ≤ 50 und bevorzugt bei 10 bis 20 Gew.-%.

Beispiele für geeignete erfindungsgemäß mitzuverwendende organische Lösungsmittel sind kettenförmige (verzweigte oder unverzweigte) oder cyclische gesättigte Kohlenwasserstoffe wie Propan, Butan, Pentan, Hexan, Heptan, Octan, Cyclopentan, Cyclohexan, Methylcyclohexan und Paraffinöle, aromatische Kohlenwasserstoffe wie Benzol, Toluol, Xylol und Isopropylbenzol, halogenierte Kohlenwasserstoffe wie Methylenchlorid, Chlorbenzol oder 1,1,1-Trichlorethan, Dialkylether wie tert.-Butylmethylether oder Isobutylmethylether, Ester aus C₁- bis C₂₀-Alkancarbonsäuren und einwertigen C₁- bis C₂₀-Alkanolen wie Ameisensäuremethylester, Ameisensäureethylester, Ameisensäurepropylester, Essigsäuremethylester, Essigsäureethylester, Essigsäurepropylester, Essigsäurebutylester, Essigsäureamylester, Propionsäuremethylester, Ethylhexansäureethylhexylester, Isopropylpalmitat oder Isopropylmyristat, Ketone, die ≥ 5 Kohlenstoffatome aufweisen wie Diethylketon, einwertige Alkanole, die > 3 Kohlenstoffatome aufweisen wie n-Butanol, n-Pentanol, iso-Pentanol, n-Hexanol, Cyclohexanol, iso-Octanol, n-Octanol, iso-Decanol oder n-Dodecanol. Selbstverständlich können auch Mischungen der vorgenannten Lösungsmittel angewendet werden.

Nach beendeter erfindungsgemäßer radikalischer wäßriger Emulsionspolymerisation wird das mitverwendete organische Lösungsmittel aus der resultierenden wäßrigen Polymerisatdispersion vorzugsweise abgetrennt. Bevorzugt werden als organische Lösungsmittel daher solche verwendet, deren Siedepunkt bei einem Druck von 1 atm ≤ 150°C, mit besonderem Vorteil ≤ 100°C beträgt. Geeignete Verfahren der Lösungsmittelabtrennung sind konventionelles Destillieren, Wasserdampfdestillieren, Strippverfahren, Adsorptionsverfahren, Ultrafiltration oder Dialyse. Der Begriff Lösungsmittel impliziert, daß es sich um chemische Verbindungen handelt, die sich bezüglich der radikalischen wäßrigen Emulsionspolymerisation im wesentlichen inert verhalten.

Monomere a) sind solche, deren Löslichkeit in Wasser bei der gewählten Polymerisationstemperatur und dem gewählten Polymerisationsdruck ≥ 5 Gew.-%, bezogen auf die Wassermenge, beträgt. D.h. rührt man bei der gewählten Polymerisationstemperatur und dem gewählten Polymerisationsdruck in entsprechender Weise 5 Gew.-% eines Monomeren a) in Wasser ein, so bildet sich eine optisch homogene transparente Phase aus, deren optisch homogene Wirkung nicht auf identischen Brechungsindices von Monomeren und Wasser beruht, sondern eine Konsequenz der innigen Vermischung der beiden Substanzen ist.

Als Monomere a) kommen beispielsweise in Betracht α,β-monoethylenisch ungesättigte Carbonsäuren wie Acrylsäure, Methacrylsäure, Itaconsäure, Crotonsäure, Fumarsäure, Maleinsäure, Halbester der Malein- oder Fumarsäure wie Maleinsäuremonomethylester, Fumarsäuremonomethylester, Maleinsäuremonoethylester, Fumarsäuremonoethylester, Maleinsäuremonobutylester und Fumarsäuremonobutylester, monoethylenisch ungesättigte Verbindungen, die wenigstens eine Phosphonsäuregruppe oder wenigstens eine Sulfonsäuregruppe aufweisen wie Vinylphosphonsäure, Natrium-vinylsulfonat, Natrium-styrolsulfonat oder Acrylamidopropansulfonsäure, monoethylenisch ungesättigte Verbindungen, die wenigstens eine Sulfatestergruppe aufweisen wie Kalium-Sulfatopropylmethacrylat oder Ammoniumsulphatoethylmethacrylat, Amide α,β-monoethylenisch ungesättigter Carbonsäuren und deren Derivate wie Acrylamid, Methacrylamid, N,N-Dimethylacrylamid, 3-Acrylamido-3-methyl-buttersäure, N,N-Dimethylaminopropylacrylamid, N-Methylol(meth)acrylamid, N,N-Dimethyl-N-methacrylamidopropyl-N-(3-sulfopropyl)ammonium-betain oder 10-Acrylamidoundecansäure, Hydroxyester aus Acryl- oder Methacrylsäure und mehrwertigen Alkoholen wie Hydroxyethylacrylat, Hydroxyethylmethacrylat, Hydroxypropylacrylat, Hydroxypropylmethacrylat oder Butandiolmonoacrylat, aber auch Monomere wie Monomethacroyloxyethylphthalat, Monomethacroyloxyethylsuccinat, Dimethylaminoethylacrylat, Dimethylaminoethylmethacrylat, Diethylaminoethylacrylat, Diethylaminoethylmethacrylat, quaternierte Ammonium(meth)acrylate wie N-Trimethyl- oder N-Triethylammoniumethylacrylat sowie N-Trimethyl- oder N-Triethylammoniummethylmethacrylat, N-Vinylpyrrolidon, N-Vinylcaprolactam, N-Vinylimidazol, N-C₁-C₁₀-Alkyl-N'-vinylimidazolium-Verbindungen wie N-Methyl-, N-Ethyl- oder N-Butyl-N'-vinylimidazolium-chlorid, -bromid oder -methosulfat, 1-Vinyl-2-methylvinylimidazol, 4- und 2-Vinylpyridin oder N-Vinylformamid.

Monomere a), die saure oder basische Gruppen aufweisen, können auch in Form ihrer durch Neutralisation mit geeigneten Säuren bzw. Basen erzeugten Salze verwendet werden. Geeignete Basen zum Zwecke der Neutralisation sind z.B. Alkalimetallhydroxide, Ammoniak oder organische Amine. Geeignete neutralisierende Säuren sind Mineralsäuren wie Schwefelsäure, Salzsäure oder Phosphorsäure sowie 1 bis 4 C-Atome aufweisende organische Säuren wie z.B. Ameisensäure, Essigsäure, Zitronensäure oder Weinsäure.

Weitere geeignete Monomere a sind tensidische Monomere. Als solche kommen z.B. Verbindungen der allgemeinen Formel (I) in Betracht 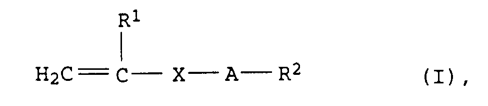 in der
- R¹: = H oder CH₃,
- X: = COO, CONH, COO-CH(OH)-CH₂, COO-CH₂-CH(OH), oder CH₂,
- A: = (̵CH₂CHYO)̵ₙ mit Y = H, CH₃ oder C₂H₅ und n = 2 bis 100 und
- R²: = H oder C₁- bis C₃₀-Alkyl
bedeuten. Vorzugsweise beträgt n in den Verbindungen der allgemeinen Formel I 10 bis 60.

Günstige tensidische Monomere sind jene der allgemeinen Formel (II) 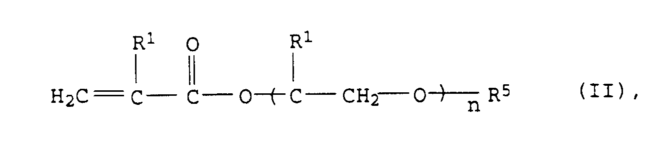 mit
- R⁵: = C₁₂- bis C₃₀-Alkyl, -Aralkyl, -Alkylaryl oder -Alkylaralkyl.

Günstige tensidische Monomere sind ferner jene der allgemeinen Formel (III) 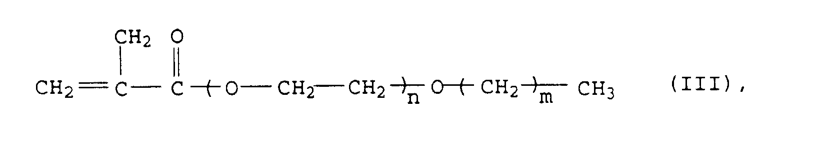 mit m = 13 bis 21.

Insbesondere sind geeignete tensidische Monomere diejenigen der US-A 4 429 097, der US-A 4 384 096, der US-A 4 421 902, der US-A 4 423 199 und der EP-A 190 892.

Bezogen auf die Gesamtmenge der zu polymerisierenden Monomeren beläuft sich der Anteil der Monomeren a) mit Vorteil auf wenigstens 40, häufig wenigstens 50 Gew.-%. Er liegt jedoch üblicherweise bei ≤ 80, häufig ≤ 70 Gew.-%. Bevorzugte Monomere a) sind solche, deren Löslichkeit in Wasser bei der gewählten Polymerisationstemperatur und dem gewählten Polymerisationsdruck ≥ 15 Gew.-%, vorzugsweise ≥ 30 Gew.-% und ganz besonders bevorzugt ≥ 50 Gew.-% beträgt.

Besonders bevorzugte Monomere a) sind Acryl- und Methacrylsäure. Mit Vorteil bestehen wenigstens 50 Gew.-%, vorzugsweise wenigstens 70 Gew.-% der Gesamtmenge der Monomeren a) aus Acryl- und/oder Methacrylsäure. Bei den restlichen Monomeren a) handelt es sich mit Vorteil um tensidische Monomere. Ein ganz besonders bevorzugtes tensidisches Monomer ist Stearyl-polyglykolether-methacrylat mit 15 bis 35 Ethylenoxideinheiten in der Polyglykolethergruppe.

Tensidische Monomere, die dem Löslichkeitserfordernis der Gruppe der Monomeren a) (Löslichkeit in Wasser ≥ 5 Gew.-% bei Polymerisationsdruck- und temperatur) nicht genügen, können als Monomere b copolymerisiert werden.

Als weitere Monomere b) kommen in Betracht Styrol und seine Derivate wie α-Methylstyrol, p-Methylstyrol, p-Chlormethylstyrol, p-Butylstyrol, p-Ethylstyrol oder p-Chlorstyrol, halogenierte monoethylenisch ungesättigte Verbindungen wie Vinylchlorid, Vinylidenchlorid oder Vinylidenfluorid, Vinylester von geradkettigen oder verzweigten 2 bis 30, insbesondere 2 bis 10 C-Atome aufweisenden Alkancarbonsäuren wie Vinylacetat, Vinylpropionat, Vinyllaurat, Neooctansäurevinylester, Neononansäurevinylester, Neodecansäurevinylester, konjugierte mehrfach ungesättigte Verbindungen wie Butadien oder Isopren, Vinylalkylether, deren Alkylrest 1 bis 30 C-Atome aufweist wie Vinyloctadecylether, aber auch Acrylnitril, Methacrylnitril, 3 bis 30 C-Atome aufweisende 1-Alkene, N-Alkylacryl- oder N-Alkylmethacrylamide, deren Alkylgruppen 4 bis 30 C-Atome aufweisen wie N-tert.-Butylacrylamid, N-tert.-Octylacrylamid oder N-Undecylmethacrylamid, Ester aus Acryl- oder Methacrylsäure und 1 bis 25 C-Atome aufweisenden Alkanolen wie Methylacrylat, Ethylacrylat, n-Butylacrylat, iso-Butylacrylat, tert.-Butylacrylat, 2-Ethylhexylacrylat, Laurylacrylat, iso-Bornylacrylat, Stearylacrylat und die entsprechenden Methacrylester, aber auch Phenoxyethylacrylat, Tetrahydrofurfurylacrylat, Tetrahydrofurfurylmethacrylat oder Perfluorethylacrylat.

Bevorzugte Monomere b) sind Styrol, Vinylester von 2 bis 30 C-Atome aufweisenden Alkancarbonsäuren, sowie Alkylacrylate und -methacrylate, die 1 bis 10 C-Atome in der Alkylgruppe aufweisen oder Gemische aus diesen Monomeren. Ganz allgemein sind solche Monomere b) bevorzugt, deren Löslichkeit in Wasser bei Polymerisationsdruck und Polymerisationstemperatur gleich oder geringer als die entsprechende Löslichkeit von Methylacrylat, vorzugsweise gleich oder geringer als die entsprechende Löslichkeit von Ethylacrylat ist.

Monomere, die üblicherweise die innere Festigkeit der Verfilmungen der wäßrigen Polymerisatdispersionen erhöhen, sogenannte vernetzend wirkende Monomere, können sowohl Monomere a) oder Monomere b) sein. Üblicherweise weisen solche Monomeren wenigstens eine Epoxy-, Hydroxy-, N-Methylol-, Carbonylgruppe oder wenigstens zwei nicht konjugierte ethylenisch ungesättigte Doppelbindungen auf. Bezogen auf die Gesamtmenge der zu polymerisierenden Monomeren werden diese Monomeren üblicherweise in einer Menge von ≤ 10 Gew.-%, vorzugsweise ≤ 5 Gew.-% einpolymerisiert.

Beispiele für solche Monomeren sind Divinylbenzol, Divinylethylenharnstoff, Diallylweinsäurediamid, Methylenbisacrylamid, Ester aus Acryl- oder Methacrylsäure und mehrwertigen Alkoholen wie Ethylenglykol, 1,4-Butandiol, Trimethylolpropan, Pentaerythrit, Neopentylglykol, Bisphenol-A, Glycerin oder Propandiol mit wenigstens zwei Estereinheiten pro Molekül, Allylester der Acryl- oder Methacrylsäure, Trivinylcyclohexan, Triallyltriazintrion, Allylether von Trimethylolpropan, Pentaerythrit und Saccharose mit mindestens zwei Allylethereinheiten pro Molekül, Dihydrodicyclopentadienylacrylat, Dihydrodicyclopentadienylmethacrylat, N-Allylmethacrylamid, N,N-Diallylweinsäurediamid oder Diallylphthalat. Besonders bevorzugt sind Divinylbenzol, Allylester der Acryl- oder Methacrylsäure, 1,4-Butandioldiacrylat oder 1,4-Butandioldimethacrylat.

Normalerweise ist beim erfindungsgemäßen Verfahren die Löslichkeit der beteiligten Monomeren b) so beschaffen, daß die am erfindungsgemäßen Verfahren beteiligte Gesamtmenge an Monomeren b) im wäßrigen Anteil des Dispergiermediums bei der gewählten Polymerisationstemperatur und dem gewählten Polymerisationsdruck nicht vollständig löslich ist.

Als radikalische Polymerisationsinitiatoren kommen für das erfindungsgemäße Verfahren alle diejenigen in Betracht, die in der Lage sind, unter Einwirkung von Licht oder Wärme radikalische wäßrige Emulsionspolymerisationen auszulösen. Es kann sich dabei sowohl um Peroxide als auch um Azoverbindungen handeln. Selbstverständlich kommen auch Redoxinitiatorsysteme in Betracht. Sie können in Wasser sowohl gut als auch wenig löslich sein. Vorzugsweise werden Peroxodischwefelsäure und/oder deren Alkalimetallsalze und/oder ihr Ammoniumsalz als radikalische Starter verwendet. Geeignet ist auch Wasserstoffperoxid oder tert.-Butylhydroperoxid. Die Einsatzmenge an radikalischen Polymerisationsinitiatoren beträgt, bezogen auf die Gesamtmenge der zu polymerisierenden Monomeren, in der Regel 0,1 bis 5 Gew.-%. Selbstverständlich kann die erfindungsgemäße radikalische wäßrige Emulsionspolymerisation auch durch ionisierende Strahlung initiiert werden.

Üblicherweise werden im Rahmen der erfindungsgemäßen radikalischen wäßrigen Emulsionspolymerisation Dispergiermittel mitverwendet, die die Stabilität der erzeugten wäßrigen Polymerisatdispersion gewährleisten. Als solche kommen sowohl die zur Durchführung von radikalischen wäßrigen Emulsionspolymerisationen üblicherweise eingesetzten Schutzkolloide als auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Selbstverständlich können auch Gemische aus Emulgatoren und/oder Schutzkolloiden verwendet werden.

Vorzugsweise werden als Dispergiermittel ausschließlich Emulgatoren eingesetzt, deren relatives Molekulargewicht vorzugsweise < 1000 beträgt. Sie können sowohl anionischer, kationischer oder nichtionischer Natur sein. Selbstverständlich müssen im Fall der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens miteinander unverträglich sind. Gebräuchliche Emulgatoren sind Alkalimetall-, Ammonium- und Aminsalze von Fettsäuren, ethoxylierte Mono-, Di- und Tri-Alkylphenole (EO-Grad: 3 bis 100, Alkylrest: C₄ bis C₁₂), ethoxylierte Fettalkohole (EO-Grad: 3 bis 100, Alkylrest: C₈ bis C₁₈), sowie Alkali- und Ammoniumsalze von Alkylsulfaten (Alkylrest: C₈ bis C₁₆), von Schwefelsäurehalbestern ethoxylierter Alkanole (EO-Grad: 1 bis 70, Alkylrest: C₁₂ bis C₁₈) und ethoxylierter Alkylphenole (EO-Grad: 3 bis 100, Alkylrest: C₄ bis C₁₂), von Alkylsulfonsäuren (Alkylrest: C₁₂ bis C₁₈) und von Alkylarylsulfonsäuren (Alkylrest: C₉ bis C₁₈). Weitere geeignete Emulgatoren wie Sulfobernsteinsäureester finden sich in Houben-Weyl, Methoden der organischen Chemie, Band XIV/1, Makromolekulare Stoffe, Georg-Thieme-Verlag, Stuttgart, 1961, Seiten 192 bis 208, oder in R. Hensch, Ullmann's Encyclopedia of Industrial Chemistry, 5. Auflage, 1987, Vol. A9, S. 297 bis 339, bei E.W. Flick, Industrial Surfactants, Noyes Publication, Park Ridage, 1988, oder bei M.R. Porter, Handbook of Surfactants, Chapmann & Hall, New York 1991.

Insbesondere eignen sich auch solche Emulgatoren, deren HLB-Wert > 8 beträgt. HLB steht als Abkürzung für "Hydrophile-Lipophile-Balance" des Emulgators und beinhaltet ein gegeneinander Abwägen der Wirkung der hydrophilen und der lipophilen Gruppen des Emulgators. Eine Definition des Begriffes findet sich beispielsweise in "Das Atlas HLB-System", Atlas Chemie GmbH, EC 10 G July 1971, und in Classification of Surface Active Agents by "HLB", W.C. Griffin, Journal of the Society of Cosmetic Chemists, Band 1, 311 (1949).

In der Regel beträgt die Menge an verwendetem Dispergiermittel 0,5 bis 20, vorzugsweise 0,5 bis 10, besonders bevorzugt 0,5 bis 5 Gew.-%, bezogen auf die radikalisch zu polymerisierenden Monomeren. Die erfindungsgemäßen unmittelbaren Verfahrensprodukte umfassen aber auch wäßrige Polymerisatdispersionen von selbstemulgierenden Polymerisaten, d.h. von Polymerisaten, die ionische Gruppen aufweisen, die aufgrund der Abstoßung von Ladungen gleichen Vorzeichens die Stabilisierung zu bewirken vermögen. Bevorzugt weisen die erfindungsgemäßen unmittelbaren Verfahrensprodukte anionische Stabilisierung (insbesondere anionische Dispergiermittel) auf. Es können aber auch kationenaktive Verbindungen eingesetzt werden, wie beispielsweise Fettamine, quartäre Ammoniumverbindungen oder quaternisierte Pyridine, Morpholine oder Imidazoline.

Das erfindungsgemäße Verfahren kann sowohl bei reduziertem Druck, bei Normaldruck (1 atm) als auch bei erhöhtem Druck durchgeführt werden. In typischer Weise beträgt der Druck bei der erfindungsgemäßen radikalischen wäßrigen Emulsionspolymerisation 0,8 bis 15 atm. Vorzugsweise wird bei Normaldruck polymerisiert.

Mit Vorteil wird die erfindungsgemäße radikalische wäßrige Emulsionspolymerisation unter Inertgasatmosphäre und unter Rühren durchgeführt. Die Polymerisationstemperatur beträgt in der Regel 0 bis 160, häufig 40 bis 160 und vorzugsweise 50 bis 120°C.

Bei Bedarf kann das Molekulargewicht der erfindungsgemäßen Emulsionspolymerisate durch das Beisein von das Molekulargewicht regelnden Verbindungen während der erfindungsgemäßen radikalischen wäßrigen Emulsionspolymerisation verringert werden. Geeignete Molekulargewichtsregler sind beispielsweise Halogenverbindungen wie Tetrachlormethan, Chloroform, Bromtrichlormethan, Allylverbindungen wie Allylalkohol oder 2,5-Diphenyl-1-hexen, Aldehyde, Ameisensäure oder Ameisensäureester. Besonders geeignete Molekulargewichtsregler sind Schwefel in chemisch gebundener Form enthaltende Verbindungen wie anorganische Hydrogensulfite, Sulfite, Disulfite und Dithionite oder organische Sulfide, Disulfide, Polysulfide, Sulfoxide, Sulfone und Mercaptoverbindungen. Bevorzugt eingesetzt werden Mercaptoalkohole, Mercaptocarbonsäuren und Mercaptoalkene mit 2 bis 30 Kohlenstoffatomen im Molekül, wie 2-Mercaptoethanol, 1,3-Mercaptopropanol, 3-Mercaptopropan-1,2-diol, 1,4-Mercaptobutanol, Cystein, Mercaptoessigsäure, 3-Mercaptopropionsäure, Mercaptobernsteinsäure, n-Butylmercaptan, n-Hexylmercaptan, n-Dodecylmercaptan oder tert.-Dodecylmercaptan. Falls das Molekulargewicht regelnde Verbindungen mitverwendet werden, werden sie in Mengen von 0,1 bis 15, vorzugsweise von 0,1 bis 5 Gew.-%, bezogen auf die zu polymerisierenden Monomeren, angewendet.

Die erfindungsgemäß erhältlichen wäßrigen Copolymerisatdispersionen können im Anschluß an ihre eigentliche Herstellung weiteren Verfahrensschritten unterworfen werden, z.B. um den Gehalt unerwünschter Verunreinigungen zu reduzieren. Solche Verfahrensschritte können beispielsweise Nachpolymerisationsverfahren, Wasserdampfbehandlungen, teilweises Abdestillieren der wäßrigen Phase oder Strippverfahren sein. Sie können aber auch anderen Behandlungsschritten wie Filter-, Trocken- oder Koagulierverfahren unterworfen werden.

Selbstverständlich können den erfindungsgemäß erhältlichen wäßrigen Copolymerisatdispersionen an sich übliche Hilfsmittel wie Komplexbildner, Schaumdämpfer, Konservierungsmittel, Korrosionsinhibitoren, Radikalfänger, Oxidationsschutzmittel, Säuren oder Basen zugesetzt werden.

Die erfindungsgemäßen wäßrigen Polymerisatdispersionen sind z.B. dadurch erhältlich, daß alle Bestandteile des Polymerisationsansatzes ins Polymerisationsgefäß vorgelegt werden und anschließend auf die Polymerisationstemperatur erwärmt wird. Es können jedoch auch verschiedene oder alle Bestandteile im Verlauf der Umsetzung, innerhalb von gegebenenfalls voneinander verschiedenen Zeiträumen, teilweise oder vollständig dem Polymerisationsgefäß zugeführt werden (Zulaufverfahren). Die Zufuhr kann über räumlich getrennte Zuläufe aber auch gegebenenfalls räumlich vereint erfolgen.

Mit Vorteil sind die erfindungsgemäßen wäßrigen Polymerisatdispersionen nach dem Zulaufverfahren dadurch erhältlich, daß man die Gesamtmenge an radikalischem Polymerisationsinitiator in Wasser vorlegt, die Vorlage auf die Polymerisationstemperatur erwärmt und anschließend unter Aufrechterhaltung der Polymerisation(stemperatur) eine die zu polymerisierenden Monomeren, das organische Lösungsmittel, Wasser und das gesamte Dispergiermittel enthaltende wäßrige Emulsion kontinuierlich, nach Maßgabe des Verbrauchs, ins Polymerisationsgefäß zulaufen läßt. Selbstverständlich kann man aber auch z.B. den Polymerisationsinitiator, z.B. als wäßrige Lösung, über einen räumlich getrennten Zulauf synchron mit den Monomeren zulaufen lassen. Auch kann ein Teil des Dispergiermittels ins Polymerisationsgefäß vorgelegt werden.

Erfindungswesentlich ist nur, daß die Polymerisation wenigstens eines Teils der zu polymerisierenden Monomeren in einem Dispergiermedium erfolgt, das neben einer wäßrigen noch eine organische Lösungsmittelphase umfaßt, wobei die Lösungsmittelmenge, bezogen auf die Gesamtmenge der zu polymerisierenden Monomeren, > 20 Gew.-% beträgt. Vorzugsweise erfolgt die Polymerisation von wenigstens 50 Gew.-% oder wenigstens 75 Gew.-% oder von 100 Gew.-% der Gesamtmenge der zu polymerisierenden Monomeren in einem Dispergiermedium, das aus einer wäßrigen und aus einer solchen organischen Lösungsmittelphase besteht.

Die erfindungsgemäßen wäßrigen Polymerisatdispersionen eignen sich generell zum Verdicken wäßriger Systeme, insbesondere zum Verdicken von Öl-in-Wasser-Emulsionen wie sie beispielsweise für kosmetische Zwecke Anwendung finden. Als Öle kommen dabei insbesondere Paraffinöle, Esteröle (z.B. Isopropylmyristat) oder natürliche Öle wie Sonnenblumenöl, Erdnußöl oder Jojobaöl in Betracht.

Üblicherweise enthalten solche Öl-in-Wasser-Emulsionen, bezogen auf ihre Gesamtmasse, 0,2 bis 10 Gew.-% an erfindungsgemäßem wäßrigem Dispersionspolymerisat zugesetzt.

### Beispiele

Herstellung verschiedener erfindungsgemäßer wäßriger Polymerisatdispersionen Di sowie von Vergleichsdispersionen VDi
- D1:: In einem Polymerisationsgefäß wurden 485 g Wasser und 0,40 g Natriumperoxodisulfat vorgelegt und unter Rühren und leichtem Stickstoffstrom auf 80°C erwärmt. Anschließend wurde dem Polymerisationsgefäß unter Aufrechterhaltung der 80°C ein gerührter Zulauf aus 114 g Wasser, 5,5 g Emulgator 1, 30 g Methacrylsäure, 30 g Acrylsäure, 75 g Methylacrylat, 15 g Stearyl-polyglycolether-methacrylat (EO-Grad: 25) und 150 g Essigsäureethylester innerhalb von 3 h kontinuierlich zugeführt. Nach beendeter Zufuhr wurde noch 1 h unter Aufrechterhaltung der 80°C gerührt. Anschließend wurden dem Reaktionsgemisch 38,2 g einer 10 gew.-%igen wäßrigen Natriumhydroxidlösung zugegeben. Danach wurde der Essigsäureethylester während 3 h bei 80°C und unter leichtem Stickstoffstrom destillativ abgetrennt. Es wurde eine wäßrige Polymerisatdispersion erhalten, die einen Feststoffgehalt von 17,7 Gew.-% aufwies. Der gewichtsmittlere Durchmesser der dispergierten Polymerisatteilchen betrug 349 nm.
- VD1:: Wie D1, jedoch ohne Zusatz von Essigsäureethylester. Der Polymerisationsansatz vergelte.
- D2:: In einem Polymerisationsgefäß wurden 450 g Wasser und 0,3 g Natriumperoxodisulfat vorgelegt und unter Rühren und leichtem Stickstoffstrom auf 80°C erwärmt. Anschließend wurde dem Polymerisationsgefäß unter Aufrechterhaltung der 80°C ein gerührter Zulauf aus 149 g Wasser, 5,5 g Emulgator 1, 60 g Methacrylsäure, 82,5 g Ethylacrylat, 7,5 g Stearyl-polyglycolether-methacrylat (EO-Grad: 25) und 75 g Cyclohexan innerhalb von 3 h kontinuierlich zugeführt. Nach beendeter Zufuhr wurde noch 2 h unter Aufrechterhaltung der 80°C gerührt. Danach wurde das Cyclohexan destillativ abgetrennt. Es wurde eine wäßrige Polymerisatdispersion erhalten, die einen Feststoffgehalt von 20,1 Gew.-% aufwies. Der K-Wert des dispergierten Polymerisats (23°C, 0,1 gew.-%ige Lösung in Tetrahydrofuran) betrug 99,9.
- D3:: Wie D2, anstelle von 75 g Cyclohexan wurden als organisches Lösungsmittel jedoch 75 g Essigsäureethylester verwendet. Es wurde eine wäßrige Polymerisatdispersion erhalten, die einen Feststoffgehalt von 19,8 Gew.-% aufwies. Der K-Wert des dispergierten Polymerisats (23°C, 0,1 gew.-%ige Lösung in Tetrahydrofuran) betrug 117. 100 ml der resultierenden, auf 1 Gew.-% Feststoffgehalt verdünnten wäßrigen Polymerisatdispersion wies nach Zusatz von 0,2 g NaOH bei 23°C eine Brookfield-Viskosität von 18 Pa·s auf.
- VD2:: Wie D2, jedoch ohne Zusatz von Cyclohexan. Es wurde eine wäßrige Polymerisatdispersion erhalten, die einen Feststoffgehalt von 20 Gew.-% aufwies. Der K-Wert des dispergierten Polymerisats (23°C, 0,1 gew.-%ige Lösung in Tetrahydrofuran) betrug 94,6.
- VD3:: In einem Polymerisationsgefäß wurden 485 g Wasser und 0,4 g Natriumperoxodisulfat vorgelegt und unter Rühren und leichtem Stickstoffstrom auf 80°C erwärmt. Anschließend wurde dem Polymerisationsgefäß unter Aufrechterhaltung der 80°C ein gerührter Zulauf aus 152 g Wasser, 5,5 g Emulgator 1, 37,5 g Methacrylsäure, 37,5 g Acrylsäure, 60 g Methylacrylat, 15 g Stearyl-polyglycolether-methacrylat (EO-Grad: 25) und 15 g Essigsäureethylester innerhalb von 3 h kontinuierlich zugeführt. Nach beendeter Zufuhr wurde noch 2 h unter Aufrechterhaltung der 80°C gerührt. Danach wurde der Essigsäureethylester destillativ abgetrennt. Anschließend wurde die wäßrige Polymerisatdispersion über ein Polyamidfilternetz mit einer Maschenweite von 120 µm filtriert. Auf dem Filter und im Rührgefäß befand sich zusammengenommen eine Koagulatmenge von > 15 g. Als Filtrat wurde eine wäßrige Polymerisatdispersion mit einem Feststoffgehalt von 16,7 Gew.-% erhalten. Der gewichtsmittlere Teilchendurchmesser betrug 4 µm. Der K-Wert des dispergierten Polymerisats (23°C, 0,1 gew.-%ige Lösung in Dimethylformamid) betrug 211.
- VD4:: Wie VD3, anstelle von 15 g Essigsäureethylester wurden jedoch 30 g Essigsäureethylester in entsprechender Weise mitverwendet. Die auf dem Filter und im Rührgefäß zusammen verbleibende Polymerisatmenge betrug 10,1 g. Als Filtrat wurde eine wäßrige Polymerisatdispersion mit einem Feststoffgehalt von 18,4 Gew.-% erhalten. Der gewichtsmittlere Teilchendurchmesser betrug 5 µm. Der K-Wert des dispergierten Polymerisats(23°C, 0,1 gew.-%ige Lösung in Dimethylformamid) betrug 217.
- D4:: Wie VD3, anstelle von 15 g Essigsäureethylester wurden jedoch in entsprechender Weise 50 g Essigsäureethylester mitverwendet. Die auf dem Filter und im Rührgefäß zusammen verbleibende Polymerisatmenge betrug 1,1 g. Als Filtrat wurde eine wäßrige Polymerisatdispersion mit einem Feststoffgehalt von 19,4 Gew.-% erhalten. Der gewichtsmittlere Teilchendurchmesser betrug 1,2 µm. Der K-Wert des dispergierten Polymerisats (23°C, 0,1 gew.-%ige Lösung in Dimethylformamid) betrug 236.
- D5:: Wie VD3, anstelle von 15 g Essigsäureethylester wurden jedoch in entsprechender Weise 75 g Essigsäureethylester mitverwendet. Die auf dem Filter und im Rührgefäß zusammen verbleibende Polymerisatmenge betrug 1,5 g. Als Filtrat wurde eine wäßrige Polymerisatdispersion mit einem Feststoffgehalt von 19,1 Gew.-% erhalten. Der gewichtsmittlere Teilchendurchmesser betrug 0,790 µm. Der K-Wert des dispergierten Polymerisats (23°C, 0,1 gew.-%ige Lösung in Dimethylformamid) betrug 241.
- D6:: In einem Polymerisationsgefäß wurden 485 g Wasser und 0,4 g Natriumperoxodisulfat vorgelegt und unter Rühren und leichtem Stickstoffstrom auf 80°C erwärmt. Anschließend wurde dem Polymerisationsgefäß unter Aufrechterhaltung der 80°C ein gerührter Zulauf aus 160 g Wasser, 5,5 g Emulgator 1, 45 g Methacrylsäure, 45 g Acrylsäure, 45 g Methylacrylat, 15 g Stearyl-polyglycolether-methacrylat -methacrylat (EO-Grad: 25) und 60 g Essigsäureethylester innerhalb von 3 h kontinuierlich zugeführt. Nach beendeter Zufuhr wurde noch 2 h unter Aufrechterhaltung der 80°C gerührt. Danach wurde der Essigsäureethylester destillativ abgetrennt. Anschließend wurde die wäßrige Polymerisatdispersion über ein Polyamidfilternetz mit einer Maschenweite von 120 µm filtriert. Als Filtrat wurde eine wäßrige Polymerisatdispersion mit einem Feststoffgehalt von 19,2 Gew.-% erhalten.
- VD5:: Wie D6, jedoch ohne Zusatz von Essigsäureethylester. Der Polymerisationsansatz koagulierte.

## Patentansprüche

1. Wäßrige Polymerisatdispersion, dadurch erhältlich, daß man ein Gemisch aus wenigstens eine ethylenisch ungesättigte Gruppe aufweisenden radikalisch polymerisierbaren Monomeren nach der Methode der radikalischen wäßrigen Emulsionspolymerisation mit der Maßgabe polymerisiert, daß
a) das Monomerengemisch zu 30 bis 90 Gew.-%, bezogen auf das Gemisch, aus Monomeren besteht, deren Löslichkeit in Wasser bei der gewählten Polymerisationstemperatur und dem gewählten Polymerisationsdruck ≥ 5 Gew.-%, bezogen auf die Wassermenge, beträgt (Monomere a),
b) das Monomerengemisch zu 10 bis 70 Gew.-%, bezogen auf das Gemisch, aus Monomeren besteht, deren Löslichkeit in Wasser bei der gewählten Polymerisationstemperatur und dem gewählten Polymerisationsdruck < 5 Gew.-%, bezogen auf die Wassermenge, beträgt (Monomere b) und
c) wenigstens ein Teil der radikalischen wäßrigen Emulsionspolymerisation in einem Dispergiermedium erfolgt, das neben Wasser aus einem organischen Lösungsmittel besteht, dessen Löslichkeit in Wasser bei der gewählten Polymerisationstemperatur und dem gewählten Polymerisationsdruck, bezogen auf die Wassermenge, ≤ 10 Gew.-% beträgt, wobei die Menge des organischen Lösungsmittels so bemessen ist, daß sie einerseits ausreicht, um neben der wäßrigen Phase die Ausbildung einer Lösungsmittelphase zu bewirken und andererseits, bezogen auf die Menge der ingesamt zu polymerisierenden Monomeren, wenigstens > 20 Gew.-% beträgt, jedoch gleichzeitig das Zweifache der im Dispergiermedium enthaltenen Wassermasse nicht übersteigt, und
d) das zu polymerisierende Monomeren gemisch tensidische Monomere umfaßt.

2. Wäßrige Polymerisatdispersion nach Anspruch 1, wobei die Löslichkeit des mitzuverwenden organischen Lösungsmittels in Wasser bei der gewählten Polymerisationstemperatur und dem gewählten Polymerisationsdruck, bezogen auf die Wassermenge, ≤ 4 Gew.-% beträgt.

3. Wäßrige Polymerisatdispersion nach Anspruch 1 oder 2, wobei die Menge des mitzuverwendenden organischen Lösungsmittels, bezogen auf die Menge der insgesamt zu polymerisierenden Monomeren, 30 bis 150 Gew.-% beträgt.

4. Wäßrige Polymerisatdispersion nach Anspruch 1 bis 3, wobei der Anteil der Monomeren a) 40 bis 80 Gew.-% beträgt.

5. Wäßrige Polymerisatdispersion nach Anspruch 1 bis 4, wobei die Monomeren a) Acryl-, Methacrylsäure oder deren Gemisch umfassen.

6. Wäßrige Polymerisatdispersion nach Anspruch 1 bis 5, wobei die Monomeren a) zu wenigstens 50 Gew.-% aus Acryl-, Methacrylsäure oder deren Gemisch bestehen.

7. Wäßrige Polymerisatdispersion nach Anspruch 1 bis 6, wobei die Monomeren a) wenigstens ein tensidisches Monomer umfassen.

8. Wäßrige Polymerisatdispersion nach Anspruch 1 bis 7, wobei die Monomeren a) wenigstens ein Monomeres der allgemeinen Formel (I) 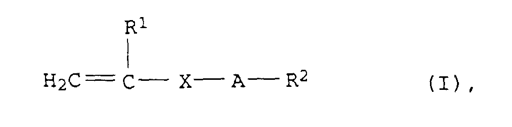 in der
R¹ = H oder CH₃,
X = COO, CONH, COO-CH(OH)-CH₂, COO-CH₂-CH(OH) oder CH₂,
A = (̵CH₂CHYO)̵ₙ mit Y = H, CH₃ oder C₂H₅ und n = 2 bis 100 und
R² = H oder C₁- bis C₃₀-Alkyl
bedeuten, umfassen.

9. Wäßrige Polymerisatdispersion nach Anspruch 1 bis 8, wobei die Monomeren b) nur solche Monomeren umfassen, deren Löslichkeit in Wasser bei dem gewählten Polymerisationsdruck und der gewählten Polymerisationstemperatur gleich oder geringer als die entsprechende Löslichkeit von Methylacrylat ist.

10. Wäßrige Polymerisatdispersion nach Anspruch 1 bis 9, wobei die Polymerisationstemperatur 40 bis 160°C beträgt.

11. Wäßrige Polymerisatdispersion nach Anspruch 1 bis 10, wobei das mitzuverwendende organische Lösungsmittel nach beendeter radikalischer wäßriger Emulsionspolymerisation abgetrennt wird.

12. Verwendung wäßriger Polymerisatdispersionen gemäß Anspruch 1 bis 11 zum Verdicken wäßriger Systeme.

13. Verwendung wäßriger Polymerisatdispersionen gemäß Anspruch 1 bis 11 zum Verdicken von Öl-in-Wasser-Emulsionen.

14. Öl-in-Wasser-Emulsion, enthaltend eine wäßrige Polymerisatdispersion gemäß Anspruch 1 bis 11.

15. Verfahren zur Herstellung einer wäßrigen Polymerisatdispersion, bei dem man ein Gemisch aus wenigstens eine ethylenisch ungesättigte Gruppe aufweisenden radikalisch polymerisbaren Monomeren nach der Methode der radikalischen wäßrigen Emulsionspolymeriation mit der Maßgabe polymerisiert, daß
a) das Monomerengemisch zu 30 bis 90 Gew.-%, bezogen auf das Gemisch, aus Monomeren besteht, deren Löslichkeit in Wasser bei der gewählten Polymerisationstemperatur und dem gewählten Polymerisationsdruck ≥ 5 Gew.-%, bezogen auf die Wassermenge, beträgt (Monomere a),
b) das Monomerengemisch zu 10 bis 70 Gew.-%, bezogen auf das Gemisch, aus Monomeren besteht, deren Löslichkeit in Was) ser bei der gewählten Polymerisationstemperatur und dem gewählten Polymerisationsdruck < 5 Gew.-%, bezogen auf die Wassermenge, beträgt (Monomere b) und
c) wenigstens ein Teil der radikalischen wäßrigen Emulsionspolymerisation in einem Dispergiermedium erfolgt, das neben Wasser aus einem organischen Lösungsmittel besteht, dessen Löslichkeit in Wasser bei der gewählten Polymerisationstemperatur und dem gewählten Polymerisationsdruck, bezogen auf die Wassermenge, ≤ 10 Gew.-% beträgt, wobei die Menge des organischen Lösungsmittels so bemessen ist, daß sie einerseits ausreicht, um neben der wäßrigen Phase die Ausbildung einer Lösungsmittelphase zu bewirken und andererseits, bezogen auf die Menge der ingesamt zu polymerisierenden Monomeren wenigstens > 20 Gew.-% beträgt, jedoch gleichzeitig das Zweifache der im Dispergiermedium enthaltenen Wassermasse nicht übersteigt, und
d) das zu polymerisierende Monomerengemisch tensidische Monomere umfaßt.

16. Verfahren zur Herstellung einer wäßrigen Polymerisatdispersion nach Anspruch 15, dadurch gekennzeichnet, daß man die Gesamtmenge an radikalischem Polymerisationsinitiator in Wasser vorlegt, die Vorlage auf die Polymerisationstemperatur erwärmt und anschließend unter Aufrechterhaltung der Polymerisation eine die zu polymerisierenden Monomeren, das organische Lösungsmittel, Wasser und das gesamte Dispergiermittel enthaltende wäßrige Emulsion kontinuierlich ins Polymerisationsgefäß zulaufen läßt.

17. Verfahren zur Herstellung einer wäßrigen Polymerisatdispersion, dadurch gekennzeichnet, daß man gemäß Anspruch 15 oder 16 verfährt und anschließend das mitverwendete organische Lösungsmittel destillativ abtrennt.

18. Wäßrige Polymerisatdispersion, erhältlich nach einem Verfahren gemäß Anspruch 16 oder 17.

19. Verwendung einer wäßrigen Polymerisatdispersion gemäß Anspruch 18 zum Verdicken wäßriger Systeme.

20. Öl-in-Wasser-Emulsion, enthaltend eine wäßrige Polymerisatdispersion gemäß Anspruch 18.

## Claims

1. An aqueous polymer emulsion which is obtainable by polymerizing a mixture of monomers, which have at least one ethylenically unsaturated group and are capable of free radical polymerization, by the free radical aqueous emulsion polymerization method, with the proviso that
a) the monomer mixture comprises from 30 to 90% by weight, based on the mixture, of monomers whose solubility in water at the chosen polymerization temperature and at the chosen polymerization pressure is ≥ 5% by weight, based on the amount of water (monomers a),
b) the monomer mixture comprises from 10 to 70% by weight, based on the mixture, of monomers whose solubility in water at the chosen polymerization temperature and at the chosen polymerization pressure is < 5% by weight, based on the amount of water (monomers b),
c) at least a part of the free radical aqueous emulsion polymerizaton is carried out in a dispersing medium which, in addition to water, comprises an organic solvent whose solubility in water at the chosen polymerization temperature and at the chosen polymerization pressure is ≤ 10% by weight, based on the amount of water, the amount of the organic solvent being such that, on the one hand, it is sufficient to form a solvent phase in addition to the aqueous phase and, on the other hand, is at least ≥ 20% by weight, based on the total amount of monomers to be polymerized, but at the same time does not exceed twice the mass of water contained in the dispersing medium, and
d) the monomer mixture to be polymerized comprises surfactant monomers.

2. An aqueous polymer emulsion as claimed in claim 1, wherein the water solubility of the organic solvent, concomitantly to be used, at the chosen polymerization temperature and at the chosen polymerization pressure is ≤ 4% by weight, based on the amount of water.

3. An aqueous polymer emulsion as claimed in claim 1 or 2, wherein the amount of organic solvent concomitantly to be used is from 30 to 150% by weight, based on the total amount of the monomers to be polymerized.

4. An aqueous polymer emulsion as claimed in any of claims 1 to 3, wherein the amount of the monomers a) is from 40 to 80% by weight.

5. An aqueous polymer emulsion as claimed in any of claims 1 to 4, wherein the monomers a) comprise acrylic or methacrylic acid or a mixture thereof.

6. An aqueous polymer emulsion as claimed in any of claims 1 to 5, wherein the monomers a) comprise at least 50% by weight of acrylic or methacrylic acid or of a mixture thereof.

7. An aqueous polymer emulsion as claimed in any of claims 1 to 6, wherein the monomers a) comprise at least one surfactant monomer.

8. An aqueous polymer emulsion as claimed in any of claims 1 to 7, wherein the monomers a) comprise at least one monomer of the formula (I) 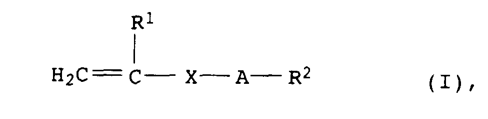 where
R¹ is H or CH₃,
X is COO, CONH, COO-CH(OH)-CH₂, COO-CH₂-CH(OH) or CH₂,
A is (̵CH₂CHYO)̵ₙ, where Y is H, CH₃ or C₂H₅ and n is from 2 to 100, and
R² is H or C₁-C₃₀-alkyl.

9. An aqueous polymer emulsion as claimed in any of claims 1 to 8, where the monomers b) comprise only those monomers whose solubility in water at the chosen polymerization pressure and at the chosen polymerization temperature is equal to or less than the corresponding solubility of methyl acrylate.

10. An aqueous polymer emulsion as claimed in any of claims 1 to 9, where the polymerization temperature is from 40 to 160°C.

11. An aqueous polymer emulsion as claimed in any of claims 1 to 10, wherein the organic solvent concomitantly to be used is separated off after the end of the free radical aqueous emulsion polymerization.

12. Use of an aqueous polymer emulsion as claimed in any of claims 1 to 11 for thickening aqueous systems.

13. Use of an aqueous polymer emulsion as claimed in any of claims 1 to 11 for thickening oil-in-water emulsions.

14. An oil-in-water emulsion containing an aqueous polymer emulsion as claimed in any of claims 1 to 11.

15. A process for the preparation of an aqueous polymer emulsion, in which a mixture of monomers which have at least one ethylenically unsaturated group and are capable of free radical polymerization is polymerized by the free radical aqueous emulsion polymerization method, with the proviso that
a) the monomer mixture comprises from 30 to 90% by weight, based on the mixture, of monomers whose solubility in water at the chosen polymerization temperature and at the chosen polymerization pressure is ≥ 5% by weight, based on the amount of water (monomers a),
b) the monomer mixture comprises from 10 to 70% by weight, based on the mixture, of monomers whose solubility in water at the chosen polymerization temperature and at the chosen polymerization pressure is < 5% by weight, based on the amount of water (monomers b),
c) at least a part of the free radical aqueous emulsion polymerizaton is carried out in a dispersing medium which, in addition to water, comprises an organic solvent whose solubility in water at the chosen polymerization temperature and at the chosen polymerization pressure is ≤ 10% by weight, based on the amount of water, the amount of the organic solvent being such that, on the one hand, it is sufficient to form a solvent phase in addition to the aqueous phase and, on the other hand, is at least > 20% by weight, based on the total amount of monomers to be polymerized, but at the same time does not exceed twice the mass of water contained in the dispersing medium, and
d) the monomer mixture to be polymerized comprises surfactant monomers.

16. Process for the preparation of an aqueous polymer emulsion as claimed in claim 15, wherein the total amount of free radical polymerization initiator is initially taken in water, the initially taken mixture is heated to the polymerization temperature and an aqueous emulsion containing the monomers to be polymerized, the organic solvent, water and the total amount of dispersant is then run continuously into the polymerization vessel, while maintaining the polymerization (temperature).

17. A process for the preparation of an aqueous polymer emulsion, wherein the procedure as claimed in claim 15 or 16 is used and the organic solvent concomitantly used is then separated off by distillation.

18. An aqueous polymer emulsion, obtainable by a process as claimed in claim 16 or 17.

19. Use of an aqueous polymer emulsion as claimed in claim 18 for thickening aqueous systems.

20. An oil-in-water emulsion containing an aqueous polymer emulsion as claimed in claim 18.

## Revendications

1. Dispersion aqueuse de polymère, pouvant être obtenue par polymérisation d'un mélange de monomères susceptibles de polymérisation radicalaire, comportant au moins un groupe à insaturation éthylénique, selon la méthode de la polymérisation radicalaire en émulsion aqueuse, étant entendu que
a) le mélange de monomères consiste à raison de 30 à 90 % en poids, par rapport au mélange, en monomères dont la solubilité dans l'eau, à la température de polymérisation choisie et sous la pression de polymérisation choisie, s'élève à ≥ 5 % en poids, par rapport à la quantité d'eau (monomères a),
b) le mélange de monomères consiste à raison de 10 à 70 % en poids, par rapport au mélange, en monomères dont la solubilité dans l'eau, à la température de polymérisation choisie et sous la pression de polymérisation choisie, s'élève à < 5 % en poids, par rapport à la quantité d'eau (monomères b) et
c) au moins une partie de la polymérisation radicalaire en émulsion aqueuse s'effectue dans un milieu de dispersion qui consiste, en plus d'eau, en un solvant organique dont la solubilité dans l'eau, à la température de polymérisation choisie et sous la pression de polymérisation choisie, s'élève à ≤ 10 % en poids, par rapport à la quantité d'eau, la quantité du solvant organique étant choisie de manière que, d'une part, elle soit suffisante pour, outre la phase aqueuse, entraîner la formation d'une phase de solvant, et, d'autre part, elle s'élève à au moins > 20 % en poids, par rapport à la quantité des monomères en totalité à polymériser, mais en même temps n'excède pas le double de la masse d'eau contenue dans le milieu de dispersion, et
d) le mélange de monomères à polymériser comprend des monomères tensioactifs.

2. Dispersion aqueuse de polymère selon la revendication 1, dans laquelle la solubilité dans l'eau du solvant organique à utiliser simultanément, à la température de polymérisation choisie et sous la pression de polymérisation choisie, s'élève à ≤ 4 % en poids, par rapport à la quantité d'eau.

3. Dispersion aqueuse de polymère selon la revendication 1 ou 2, dans laquelle la quantité du solvant organique à utiliser simultanément, par rapport à la quantité de la totalité des monomères à polymériser, va de 30 à 150 % en poids.

4. Dispersion aqueuse de polymère selon l'une des revendications 1 à 3, dans laquelle la proportion des monomères a) va de 40 à 80 % en poids.

5. Dispersion aqueuse de polymère selon l'une des revendications 1 à 4, dans laquelle les monomères a) comprennent l'acide acrylique, l'acide méthacrylique ou un mélange de ceux-ci.

6. Dispersion aqueuse de polymère selon l'une des revendications 1 à 5, dans laquelle les monomères a) consistent à raison d'au moins 50 % en poids en acide acrylique, en acide méthacrylique ou en un mélange de ceux-ci.

7. Dispersion aqueuse de polymère selon l'une des revendications 1 à 6, dans laquelle les monomères a) comprennent au moins un monomère tensioactif.

8. Dispersion aqueuse de polymère selon l'une des revendications 1 à 7, dans laquelle les monomères a) comprennent au moins un monomère de formule générale (I) 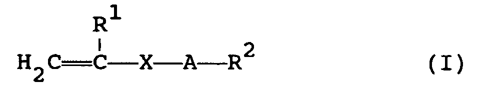 dans laquelle
R¹ = H ou CH₃,
X = COO, CONH, COO-CH(OH)-CH₂, COO-CH₂-CH(OH) ou CH₂,
A = 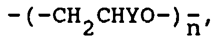 avec Y = H, CH₃ ou C₂H₅ et n = 2 à 100 et
R² = H ou un groupe alkyle en C₁-C₃₀.

9. Dispersion aqueuse de polymère selon l'une des revendications 1 à 8, dans laquelle les monomères b) ne comprennent que des monomères dont la solubilité dans l'eau, à la température de polymérisation choisie et sous la pression de polymérisation choisie, est inférieure ou égale à la solubilité correspondante de l'acrylate de méthyle.

10. Dispersion aqueuse de polymère selon l'une des revendications 1 à 9, dans laquelle la température de polymérisation est de 40 à 160°C.

11. Dispersion aqueuse de polymère selon l'une des revendications 1 à 10, dans laquelle le solvant organique à utiliser simultanément est séparé, une fois terminée la polymérisation radicalaire en émulsion aqueuse.

12. Utilisation de dispersions aqueuses de polymères selon l'une des revendications 1 à 11, pour l'épaississement de systèmes aqueux.

13. Utilisation de dispersions aqueuses de polymères selon l'une des revendications 1 à 11, pour l'épaississement d'émulsions huile-dans-eau.

14. Emulsion huile-dans-eau, contenant une dispersion aqueuse de polymère selon l'une des revendications 1 à 11.

15. Procédé pour la préparation d'une dispersion aqueuse de polymère, dans lequel on polymérise un mélange de monomères susceptibles de polymérisation radicalaire, comportant au moins un groupe à insaturation éthylénique, selon la méthode de la polymérisation radicalaire en émulsion aqueuse, étant entendu que
a) le mélange de monomères consiste à raison de 30 à 90 % en poids, par rapport au mélange, en monomères dont la solubilité dans l'eau, à la température de polymérisation choisie et sous la pression de polymérisation choisie, s'élève à ≥ 5 % en poids, par rapport à la quantité d'eau (monomères a),
b) le mélange de monomères consiste à raison de 10 à 70 % en poids, par rapport au mélange, en monomères dont la solubilité dans l'eau, à la température de polymérisation choisie et sous la pression de polymérisation choisie, s'élève à ≤ 5 % en poids, par rapport à la quantité d'eau (monomères b) et
c) au moins une partie de la polymérisation radicalaire en émulsion aqueuse s'effectue dans un milieu de dispersion qui consiste, en plus d'eau, en un solvant organique dont la solubilité dans l'eau, à la température de polymérisation choisie et sous la pression de polymérisation choisie, s'élève à ≤ 10 % en poids, par rapport à la quantité d'eau, la quantité du solvant organique étant choisie de manière que, d'une part, elle soit suffisante pour, outre la phase aqueuse, entraîner la formation d'une phase de solvant, et, d'autre part, elle s'élève à au moins > 20 % en poids, par rapport à la quantité des monomères en totalité à polymériser, mais en même temps n'excède pas le double de la masse d'eau contenue dans le milieu de dispersion, et
d) le mélange de monomères à polymériser comprend des monomères tensioactifs.

16. Procédé pour la préparation d'une dispersion aqueuse de polymère selon la revendication 15, caractérisé en ce que l'on dispose au préalable la quantité totale d'amorceur de polyméristion radicalairedans l'eau, on porte le mélange initial à la température de polymérisation et on fait ensuite s'écouler en continu dans le récipient de polymérisation, avec maintien de la polymérisation, une émulsion aqueuse contenant les monomères à polymériser, le solvant organique, de l'eau et la totalité du dispersant.

17. Procédé pour la préparation d'une dispersion aqueuse de polymère, caractérisé en ce que l'on procède selon la revendication 15 ou 16, et ensuite on sépare par distillation le solvant organique utilisé simultanément.

18. Dispersion aqueuse de polymère, pouvant être obtenue conformément à un procédé selon la revendication 16 ou 17.

19. Utilisation d'une dispersion aqueuse de polymère selon la revendication 18, pour l'épaississement de systèmes aqueux.

20. Emulsion huile-dans-eau, contenant une dispersion aqueuse de polymère selon la revendication 18.
